# EUROPÄISCHE PATENTANMELDUNG

(11) **EP 2 345 494 A2**
(43) Veröffentlichungstag der Anmeldung: **20.07.2011**
(21) Anmeldenummer: 10014264.5
(22) Anmeldetag: 03.11.2010
(51) Int. Cl.: B23B 31/00, B23B 31/20, B23G 5/00, B23Q 11/10

(54) **Spannfutter für Werkzeuge**

(30) Priorität: 14.01.2010 DE 102010004558; 20.03.2010 DE 102010013430
(71) Anmelder: Bilz Werkzeugfabrik GmbH & Co. KG, 73760 Ostfildern (DE)
(72) Erfinder: Babel, Gerhard, 73666 Baltmannsweiler (DE)
(74) Vertreter: Kratzsch, Volkhard

(57) **Zusammenfassung**

Ein Spannfutter (10) für Werkzeuge (11) hat eine in ihrer Längsrichtung mehrfach geschlitzte, außen konische Spannzange (13), die in einen vorderen, einen entsprechenden Innenkonus (25) bildenden Teil (24) eines Futterkörpers (12) eingreift, in den ein Kühlmittelzufuhrkanal (23) mündet, der innerhalb eines Kühlmittelzufuhrrohres (35) und eines Längeneinstellmittels (22) für das Werkzeug (11) gebildet ist. In das Längeneinstellmittel (22) mündet dieses Kühlmittelzufuhrrohr (35) aus, wobei am Längeneinstellmittel (22) das Werkzeug (11) mit einer Endfläche (36) anliegen kann. Ferner ist eine Spannmutter (14) vorgesehen, die mit einem Hülsenabschnitt (28) den vorderen Teil (24) des Futterkörpers (12) übergreift und mittels einer Gewindeverbindung (29,30) axial verstellbar darauf gehalten ist und mit der Spannzange (13) axial verschiebbar verbunden ist. Kontaktbereiche des Kühlmittelzufuhrkanals (23) und/oder die Gewindeverbindung (29,30) sind mittels mindestens einer Dichtungseinrichtung (40;44;48) abgedichtet, so dass durchgeleitetes Kühl-/Schmiermittel, insbesondere ein Aerosol, ausschließlich durch das eingespannte Werkzeug (11) austritt (Fig. 1).

## Beschreibung

Die Erfindung bezieht sich auf ein Spannfutter für Werkzeuge, insbesondere solche mit innerem Kühlmittelkanal, z. B. für Gewindebohrer, mit den Merkmalen im Oberbegriff des Anspruchs 1.

Spannfutter eingangs genannter Art sind bekannt. Die Spannzangen sind üblicherweise in ihrer Längsrichtung mehrfach geschlitzt. Durch derartige Spannzangen kann ein Kühl-/Schmiermittel, welches durch den Futterkörper hindurch bis zum Werkzeug geleitet wird, austreten, da es bisher nicht möglich ist, ein Spannfutter der eingangs genannten Art derart abzudichten, dass das hindurchgeleitete Kühl-/Schmiermittel ausschließlich durch das eingespannte Werkzeug austritt. Auch im Verlauf des Kühlmittelzufuhrkanals vom Kühlmittelzufuhrrohr bis zur Einleitung in den inneren Kühlmittelkanal des Werkzeuges sind kritische Bereiche vorhanden, bei denen hindurch geleitetes Kühl-/Schmiermittel verloren gehen kann. Als Kühl-/Schmiermittel kann sowohl eine Emulsion, die unter hohem Druck durch das Spannfutter in das Werkzeug eingeleitet wird, als auch ein Aerosol dienen, welches unter geringem Druck durch das Futter in das Werkzeug strömt. Während ein Verlust an unter hohem Druck geführter Emulsion aufgrund Undichtigkeiten wegen des hohen Systemdrucks noch tolerierbar wäre, würde eine Undichtigkeit im Falle eines Aerosols, welches unter geringem Druck geführt wird, zum Versagen einer solchen Kühlung bzw. Schmierung führen.

Der Erfindung liegt die Aufgabe zugrunde, ein Spannfutter für Werkzeuge der eingangs genannten Art zu schaffen, das aufgrund Abdichtung gewährleistet, dass das hindurchgeleitete Kühl-/Schmiermittel ausschließlich durch das eingespannte Werkzeug austritt.

Die Aufgabe ist bei einem Spannfutter der eingangs genannten Art gemäß der Erfindung dadurch gelöst, dass Kontaktbereiche des Kühlmittelzufuhrkanals und/oder die Gewindeverbindung zwischen dem vorderen Teil des Futterkörpers und dem Hülsenabschnitt der Spannmutter mittels mindestens einer Dichtungseinrichtung abgedichtet sind. Weitere vorteilhafte Erfindungsmerkmale und Ausgestaltungen hierzu ergeben sich aus den Unteransprüchen. Aufgrund der mindestens einen Dichtungseinrichtung ist sichergestellt, dass im Verlauf des Kühlmittelzufuhrkanals und/oder trotz Verwendung der geschlitzten Spannzange kein Kühl-/Schmiermittel austritt, sondern dieses ausschließlich durch das eingespannte Werkzeug hindurch nach Außen gelangt. Damit ist sichergestellt, dass bei der inneren Kühlmittelzuführung durch das Werkzeug und/oder bei radial geschlitzter Spannzange der Einsatz eines Aerosols, das unter geringem Druck geführt wird, mit allen Vorteilen zur Wirkung kommen kann.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Hinweis darauf Bezug genommen, wodurch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand eines in den Zeichnungen gezeigten Ausführungsbeispieles näher erläutert. Es zeigen:
- Fig. 1: einen schematischen axialen Längsschnitt eines Spannfutters mit Spannzange und darin gehaltenem Werkzeug,
- Fig. 2: einen vergrößerten Längsschnitt einer Einzelheit des Spannfutters in Fig. 1.

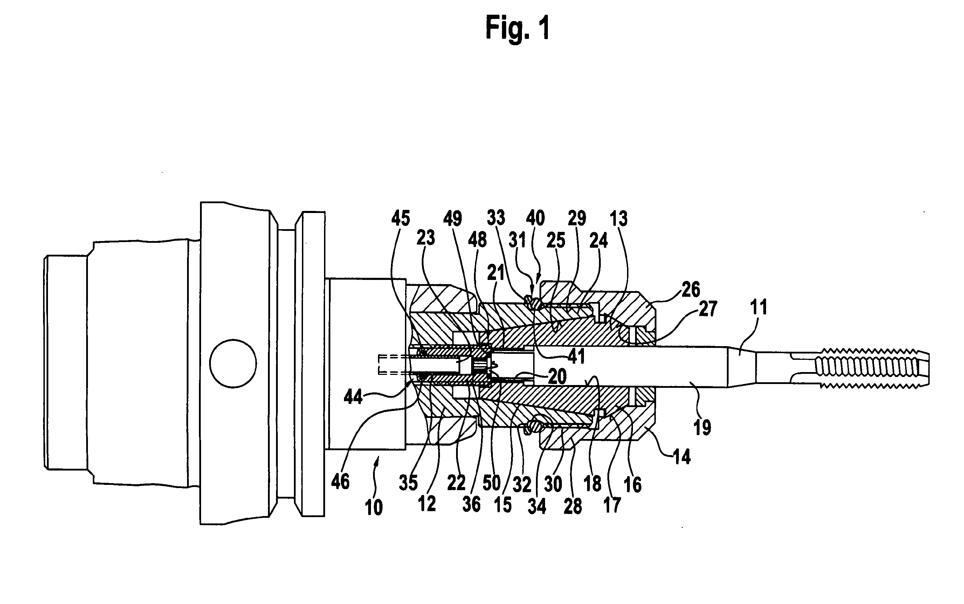

In den Zeichnungen ist schematisch ein Spannfutter 10 für Werkzeuge 11 gezeigt, das einen Futterkörper 12, eine Spannzange 13 und eine auf den Futterkörper 12 aufgeschraubte Spannmutter 14 aufweist und insoweit herkömmlicher Art ist. Als Werkzeug 11 ist in Fig. 1 als Beispiel ein Gewindebohrer gezeigt. Dieser hat mit Vorzug einen nicht weiter sichtbaren inneren Kühlmittelkanal, durch den ein Kühl-/Schmiermittel hindurchgeleitet wird. Dieses Kühl-/Schmiermittel ist entweder als Emulsion ausgebildet und wird unter hohem Druck durch den Futterkörper 12 und in das Werkzeug 11 geleitet. Statt dessen kann das Kühl-/Schmiermittel auch aus einem Aerosol bestehen, das unter geringem Druck durch den Futterkörper 12 in das Werkzeug 11 strömt. Hierbei handelt es sich um die sog. Minimalmengenschmierung.

Die Spannzange 13 ist in üblicher Weise in ihrer Längsrichtung mehrfach geschlitzt und außen konisch, wobei dieser entsprechende konische Abschnitt 15 sich über eine wesentliche Länge der Spannzange 13 erstreckt. Am vorderen Ende weist die Spannzange 13 einen gegensinnig konisch gestalteten Kopf 16 mit Konusfläche 17 auf. Die Spannzange 13 enthält eine mit dem Futterkörper 12 koaxiale innere Aufnahme 18, in die das Werkzeug 11 mit einem zylindrischen Schaft 19 eingesteckt ist, der am Ende einen Vielkant 20 trägt, der mit Formschluss in einer Vielkantaufnahme 21 am Ende der Aufnahme 18 und damit drehmomentübertragend aufgenommen ist. Das Werkzeug 11 sitzt endseitig mit einer Endfläche 36 an einem die Einstecktiefe vorgebenden Längeneinstellmittel 22, z. B. in Form einer Stellschraube, auf, die wie das Werkzeug 11 auch mit einem inneren Kühlmittelzufuhrkanal 23 versehen ist. Die Anlage kann eine metallische Plananlage mit dadurch erzielter Abdichtung sein oder stattdessen ist axial zwischen dem Längeneinstellmittel 22 und der Endfläche 36 eine Dichtungseinrichtung 48, z. B. in Form eines Dichtungsringes 49, z. B. eines O-Ringes, vorgesehen, der z. B. in einer Keilnut 50 an der Stirnseite des Längeneinstellmittels 22 aufgenommen ist.

Der Futterkörper 12 weist einen im wesentlichen zylindrischen vorderen Teil 24 auf, der einen Innenkonus 25 bildet, der dem konischen Abschnitt 15 der Spannzange 13 entspricht und der Aufnahme dieses dient. Die Spannmutter 14 weist einen dem Kopf 16 und dessen Konusfläche 17 zugeordneten vorderen Ringteil 26 mit Innenkonus 27 auf, der mit der Konusfläche 17 der Spannzange 13 zusammenwirkt zum radialen Spannen bzw. Lösen der Spannzange 13. Die Spannmutter 14 weist anschließend an den Ringteil 26 einen etwa zylindrischen Hülsenabschnitt 28 auf, der den vorderen Teil 24 des Futterkörpers 12 übergreift. Der Hülsenabschnitt 28 weist ein Innengewinde 29 auf, mit dem der Hülsenabschnitt 28 auf ein Außengewinde 30 des vorderen Teils 24 aufgeschraubt ist. Das Innengewinde 29 und Außengewinde 30 stellt eine Gewindeverbindung zwischen der Spannmutter 14 und dem vorderen Teil 24 des Spannfutters 12 dar, mittels der die Spannmutter 14 axial verstellbar und axial verschiebbar mit der Spannzange 13 verbunden ist. Diese Gewindeverbindung 29, 30 ist mittels einer Dichtungseinrichtung 40 abgedichtet. Die Dichtungseinrichtung 40 ist radial und/oder axial abdichtend. Sie ist zwischen dem Hülsenabschnitt 28 der Spannmutter 14 und dem vorderen Teil 24 des Futterkörpers 12 wirksam und bewirkt eine radiale und axiale Abdichtung, so dass das durchgeleitete Kühl-/Schmiermittel ausschließlich durch das eingespannte Werkzeug 11 austritt, unabhängig davon, ob nun eine eingangs erläuterte innere Kühlmittelzufuhr mit einer unter hohem Druck geführten Emulsion oder eine Minimalmengenschmierung mit unter geringem Druck geführtem Aerosol vorliegt.

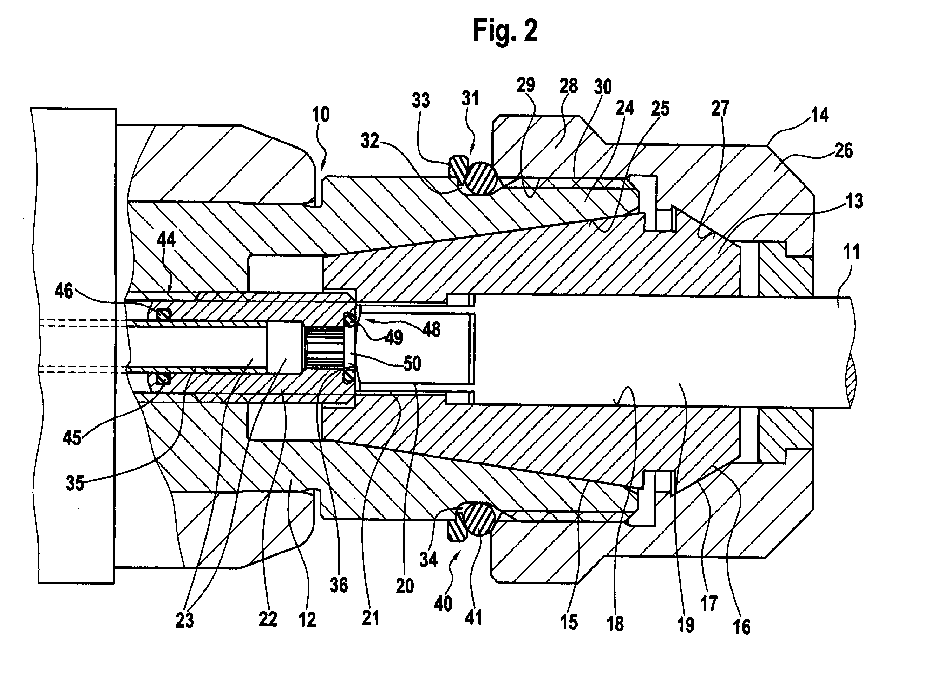

Die Dichtungseinrichtung 40 ist an einem der axialen Endbereiche der Gewindeverbindung 29, 30 angeordnet, und zwar beim gezeigten Ausführungsbeispiel am hinteren Endbereich der Gewindeverbindung 29, 30. Die Dichtungseinrichtung 40 weist einen Dichtungsring 41 auf, der z. B. aus einem O-Ring besteht. Die Anordnung kann dabei so getroffen sein, dass der vordere Teil 24 des Futterkörpers 12 und/oder der Hülsenabschnitt 28 der Spannmutter 14 einen Axialanschlag für die Dichtungseinrichtung 40, insbesondere den Dichtungsring 41, aufweist. Beim gezeigten Ausführungsbeispiel ist mindestens ein solcher Axialanschlag 31 am vorderen Teil 24 vorgesehen. Als Axialanschlag kann eine radial überstehende Schulter 32 am vorderen Teil 24 ausreichend sein. In Fig. 2 ist ein Axialanschlag 31 in Form eines Ringes 33 angedeutet. Beide sind beim gezeigten Ausführungsbeispiel Teil des vorderen Teils 24. Bei einem anderen, nicht gezeigten Ausführungsbeispiel kann ein Axialanschlag 31 auch am Ende des Hülsenabschnitts 28 vorgesehen sein.

Der vordere Teil 24 des Futterkörpers 12 und/oder der Hülsenabschnitt 28 der Spannmutter 14 können mit einer Ringausnehmung versehen sein, in der die Dichtungseinrichtung 40, insbesondere der Dichtungsring 41, mit zumindest einem Teil seines Querschnitts aufgenommen ist. Beim gezeigten Ausführungsbeispiel ist eine derartige Ringausnehmung 34 am vorderen Teil 24 des Futterkörpers 12 vorgesehen. In dieser Ringausnehmung 34 ist der Dichtungsring 41 radial mit einem Querschnittsteil versenkt aufgenommen und auf diese Weise verliersicher gehalten. Der Hülsenabschnitt 28 der Spannmutter 14 liegt mit seinem hinteren Ende, das dem in der Zeichnung linken Endbereich der Gewindeverbindung 29, 30 benachbart ist, an dem Dichtungsring 41 an und beaufschlagt diesen axial und/oder radial in Bezug auf den vorderen Teil 24 des Futterkörpers 12. Dadurch ist eine Abdichtung am hinteren Ende der Gewindeverbindung 29, 30 erreicht und gewährleistet, dass kein Kühl-/Schmiermittel durch die Spannzange 13 hindurch nach außen austreten kann. Bei einem anderen, nicht gezeigten Ausführungsbeispiel ist der Dichtungsring 41 statt dessen am vorderen Ende der Gewindeverbindung 29, 30 vorgesehen und dichtet dabei ebenfalls den Bereich zwischen der Spannmutter 14 und dem vorderen Teil 24 des Futterkörpers 12 zuverlässig ab.

Bei einem anderen, nicht gezeigten Ausführungsbeispiel ist die Dichtungseinrichtung 40 zwischen der Gewindeverbindung 29, 30 vorgesehen, mit dem gleichen Vorteil.

Man erkennt, dass der Kühlmittelzufuhrkanal 23 innerhalb eines Kühlmittelrohres 35 und des Längeneinstellmittels 22 gebildet ist, in das das Kühlmittelzufuhrrohr 35 ausmündet. Über dieses Kühlmittelzufuhrrohr 35 wird von einer nicht gezeigten Quelle her das Kühl-/Schmiermittel insbesondere in Form eines Aerosols bei praktizierter Mindermengenschmierung zugeführt und gelangt über das Längeneinstellmittel 22 zu einem nicht gezeigten inneren Kühlmittelkanal des Werkzeuges 11. Das Kühlmittelzufuhrrohr 35 einerseits und Längeneinstellmittel 22 andererseits sind axial relativ zueinander bewegbar. Zwischen der Außenfläche des Kühlmittelzufuhrrohres 35 und der Innenseite des Längeneinstellmittels 22 besteht ein Spalt. Durch diesen Spalt könnte das Kühl-und/oder Schmiermittel aufgrund des Zufuhrdruckes nach außen zum Äußeren des Kühlmittelzufuhrrohres 35 bzw. des Längeneinstellmittels 22 gelangen. Dies wird durch eine Dichtungseinrichtung 44 zwischen dem Längeneinstellmiftel 22 und dem Kühlmittelzufuhrrohr 35 verhindert. Die Dichtungseinrichtung 44 besteht aus einem Dichtungsring 46, z. B. aus einem O-Ring. Sie ist zwischen der Außenfläche des Kühlmittelrohres 35 und der Innenseite des Längeneinstellmittels 22 vorgesehen. Auf der Innenseite des Längeneinstellmittels 22 ist eine Aufnahme 45 z. B. in Form einer Ringnut enthalten, in der die Dichtungseinrichtung 44, insbesondere der Dichtungsring 46, aufgenommen ist, so dass dieser in radialer Richtung auf der Außenfläche des Kühlmittelzufuhrrohres 35 zur Abdichtung anliegen kann.

Ein derart abgedichtetes Spannfutter ist hinsichtlich der Dichtungseinrichtung 40, 44, 48 einfach, kostengünstig und betriebssicher. Es wird mittels der jeweiligen Dichtungseinrichtung eine radiale und axiale Abdichtung derart gewährleistet, dass das durchgeleitete Kühl-/Schmiermittel ausnahmslos durch das eingespannte Werkzeug 11 austritt.

## Patentansprüche

1. Spannfutter für Werkzeuge, insbesondere solche mit innerem Kühlmittelkanal, z. B. für Gewindebohrer, mit einer in ihrer Längsrichtung mehrfach geschlitzten, außen konischen Spannzange (13), die in einen vorderen, einen entsprechenden Innenkonus (25) bildenden Teil (24) eines Futterkörpers (12) eingreift, in den ein Kühlmittelzufuhrkanal (23) mündet, der innerhalb eines Kühlmittelzufuhrrohres (35) und eines Längeneinstellmittels (22) für das Werkzeug (11) gebildet ist, in das das Kühlmittelzufuhrrohr (35) ausmündet und an dem das Werkzeug (11) mit einer Endfläche (36) anliegen kann, mit einer Spannmutter (14), die mit einem Hülsenabschnitt (28) den vorderen Teil (24) des Futterkörpers (12) übergreift und mittels einer Gewindeverbindung (29, 30) axial verstellbar darauf gehalten ist und mit der Spannzange (13) axial verschiebbar verbunden ist,
**dadurch gekennzeichnet,**
**dass** Kontaktbereiche des Kühlmittelzufuhrkanals (23) und/oder die Gewindeverbindung (29, 30) mittels mindestens einer Dichtungseinrichtung (40; 44; 48) abgedichtet sind.

2. Spannfutter nach Anspruch 1,
**dadurch gekennzeichnet,**
**dass** eine Dichtungseinrichtung (40) zwischen dem Hülsenabschnitt (28) der Spannmutter (14) und dem vorderen Teil (24) des Futterkörpers (12) wirksam ist.

3. Spannfutter nach Anspruch 2,
**dadurch gekennzeichnet,**
**dass** die Dichtungseinrichtung (40) radial und/oder axial abdichtend ist.

4. Spannfutter nach einem der Ansprüche 1 bis 3,
**dadurch gekennzeichnet,**
**dass** die Dichtungseinrichtung (40) zwischen der Gewindeverbindung (29, 30) vorgesehen ist.

5. Spannfutter nach einem der Ansprüche 1 bis 3,
**dadurch gekennzeichnet,**
**dass** die Dichtungseinrichtung (40) an einem axialen Endbereich der Gewindeverbindung (29, 30) angeordnet ist.

6. Spannfutter nach Anspruch 5,
**dadurch gekennzeichnet,**
**dass** die Dichtungseinrichtung (40) am hinteren Endbereich der Gewindeverbindung (29, 30) angeordnet ist.

7. Spannfutter nach einem der Ansprüche 1 bis 6,
**dadurch gekennzeichnet,**
**dass** der vordere Teil (24) des Futterkörpers (12) und/oder der Hülsenabschnitt (28) der Spannmutter (14) einen Axialanschlag (31) für die Dichtungseinrichtung (40) aufweist.

8. Spannfutter nach einem der Ansprüche 1 bis 7,
**dadurch gekennzeichnet,**
**dass** der vordere Teil (24) des Futterkörpers (12) und/oder der Hülsenabschnitt (28) der Spannmutter (14) eine Ringausnehmung (34) aufweist, in der die Dichtungseinrichtung (40) mit zumindest einem Teil des Querschnitts aufgenommen ist.

9. Spannfutter nach einem der Ansprüche 1 bis 8,
**dadurch gekennzeichnet,**
**dass** der Hülsenabschnitt (28) der Spannmutter (14) mit seinem hinteren Ende, das dem Endbereich der Gewindeverbindung (29, 30) benachbart ist, an der Dichtungseinrichtung (40) anliegt und diese axial und/oder radial in Richtung auf den vorderen Teil (24) des Futterkörpers (12) beaufschlagt.

10. Spannfutter nach einem der Ansprüche 1 bis 9,
**dadurch gekennzeichnet,**
**dass** eine Dichtungseinrichtung (44) zwischen dem Längeneinstellmittel (22) und dem Kühlmittelzufuhrrohr (35) vorgesehen ist.

11. Spannfutter nach Anspruch 10,
**dadurch gekennzeichnet,**
**dass** die Dichtungseinrichtung (44) zwischen der Außenfläche des Kühlmittelzufuhrrohres (35) und der Innenseite des Längeneinstellmittels (22) vorgesehen ist.

12. Spannfutter nach Anspruch 10 oder 11,
**dadurch gekennzeichnet,**
**dass** die Dichtungseinrichtung (44) in einer Aufnahme (45) auf der Innenseite des Längeneinstellmittels (22) enthalten ist und auf der Außenfläche des Kühlmittelzufuhrrohres (35) anliegt.

13. Spannfutter nach einem der Ansprüche 1 bis 12,
**dadurch gekennzeichnet,**
**dass** axial zwischen dem Längeneinstellmittel (22) und der Endfläche (36) des Werkzeuges (11) eine Abdichtung durch Plananlage vorgesehen ist.

14. Spannfutter nach Anspruch 13,
**dadurch gekennzeichnet,**
**dass** eine Dichtungseinrichtung (48) axial zwischen dem Längeneinstellmittel (22) und der Endfläche (36) eines Werkzeuges (11) vorgesehen ist.

15. Spannfutter nach einem der Ansprüche 1 bis 14,
**dadurch gekennzeichnet,**
**dass** die Dichtungseinrichtung (40; 44; 48) einen Dichtungsring (41; 46; 49), z. B. einen O-Ring, aufweist.
